Europäisches Patentamt

(19) European Patent Office

Office européen des brevets

(11) Veröffentlichungsnummer: **0 162 513**
**B1**

(12) **EUROPÄISCHE PATENTSCHRIFT**

(45) Veröffentlichungstag der Patentschrift: 01.08.90

(51) Int. Cl.⁵: **H 02 K 7/075**

(21) Anmeldenummer: **85200732.7**

(22) Anmeldetag: **10.05.85**

(54) **Antriebsvorrichtung zum Umwandeln der Drehbewegung einer Motorwelle in eine pulsierende Axialbewegung.**

(30) Priorität: **23.05.84 DE 3419177**

(43) Veröffentlichungstag der Anmeldung:
**27.11.85 Patentblatt 85/48**

(45) Bekanntmachung des Hinweises auf die Patenterteilung:
**01.08.90 Patentblatt 90/31**

(84) Benannte Vertragsstaaten:
**AT DE FR GB IT**

(56) Entgegenhaltungen:
**EP-A-0 050 582
DE-A-2 458 610
DE-A-2 854 519
US-A-2 524 207**

(73) Patentinhaber: **Philips Patentverwaltung GmbH
Wendenstrasse 35 Postfach 10 51 49
D-2000 Hamburg 1 (DE)**
(84) **DE**

(73) Patentinhaber: **N.V. Philips'
Gloeilampenfabrieken
Groenewoudseweg 1
NL-5621 BA Eindhoven (NL)**
(84) **FR GB IT AT**

(72) Erfinder: **Bertram, Leo
Am Sender 10
D-5190 Stolberg (DE)**
Erfinder: **Bukoschek, Romuald Leander
Dr.-Palla-Gasse 28
A-9020 Klagenfurt (AT)**

(74) Vertreter: **Kupfermann, Fritz-Joachim, Dipl.-Ing.
et al
Philips Patentverwaltung GmbH Wendenstrasse
35 Postfach 10 51 49
D-2000 Hamburg 1 (DE)**

**Beschreibung**

Die Erfindung bezieht sich auf eine Antriebsvorrichtung mit einem netzangetriebenen Rotationsantriebsmotor zum Umwandeln der Drehbewegung der Motorwelle in eine pulsierende Axialbewegung mittels eines exzentrischen Nockens, insbesondere zum Antreiben eines Pumpenkolbens.

Einphasensynchronmotoren drehen in bekannter Weise auch bei Belastung mit konstanter Drehzahl, solange das Lastmoment das maximale Drehmoment nicht übersteigt. Bei Überlast bleibt der Motor stehen und läuft anschließend daran unter Umständen auch in der Gegenrichtung wieder mit synchroner Drehzahl, wenn das Lastmoment in der Zwischenzeit gesunken ist.

Aus der EP—OS 45 107 ist es bekannt, über ein Getriebe und einen exzentrischen Nocken einem Messerbalken eines Trockenrasierapparates eine hin- und hergehende Bewegung aufzuprägen. Weiterhin ist es bekannt, unmittelbar auf einer Motorwelle einen exzentrischen Nocken anzuordnen, der einen Messerbalken eines Trockenrasierapparates in Vibrationsbewegungen versetzt. Dabei treten in den Bewegungsumkehrpunkten aber keine besonderen Stoßbelastungen auf.

Es ist auch bekannt, Zahnspülgeräte mit kleinen Kolbenpumpen einzusetzen, die pulsierende Wasserstrahlen zum Zahnspülen abgeben können. Diese kleinen Kolbenpumpen werden mittels Spaltpolmotoren angetrieben. Diese Motoren benötigen einerseits relativ viel elektrische Leistung und haben andererseits Abmessungen, die den Formgestalter bei der Gestaltung derartiger Geräte festlegen. Nachteilig ist dabei aber insbesondere, daß die mittlere Impulszahl lastabhängig und spannungsabhängig ist.

Aus der US—A—25 24 207 ist ein Kompressor bekannt, der eine relativ dicke Rotorwelle aufweist. Diese relativ dicke Rotorwelle ist auf einer Ständerseite zweifach gelagert, wobei sich zwischen den Lagerungen ein aus der Rotorwelle herausgearbeiteter exzentrischer Kurbelzapfen befindet, auf dem das Pleuel eines Kompressorkolbens gelagert ist. Für diesen betriebsmäßigen Aufbau ist ein spezieller Motor mit einer speziellen Rotorwelle erforderlich. Der Kompressor ist darüber hinaus voluminös und leistungsmäßig nicht in Verbindung mit Trenntransformator-Steckdosen in Badezimmern einsetzbar.

Es ist Aufgabe der Erfindung, eine Antriebsvorrichtung der eingangs erwähnten Art zu schaffen, die mit einem Motor geringer Stromaufnahme arbeitet und geeignet ist, auch an Trenntransformatorsteckdosen in Badezimmern zu arbeiten. Außerdem soll die Vorrichtung im Lastbereich last- und netzspannungsunabhängig mit einer mittleren Impulszahl pro Minute arbeiten.

Die gestellte Aufgabe ist erfindungsgemäß gelöst durch einen kraftschlüssig mit der Motorwelle eines Einphasensynchronmotors verbundenen, mit der Motorwelle gleichachsigen Walzenkörper, der mit seinem exzentrischen Kurbelnokken auf eine Kolbenstange einwirkt, und eine Mehrfachlagerung dieses Antriebswellenzuges, bestehend aus einem breitflächigen Lager für den Mantel des Walzenkörpers und einem Wellenlager für einen auf der vom Motor abliegenden Seite auf dem Walzenkörper vorstehenden Wellenstummel.

Der Einphasensynchronmotor sorgt dabei für eine last- und spannungsunabhängige gleichbleibende mittlere Pulsfrequenz, und er gibt einem Formgestalter aufgrund seiner kleinen Bauweise viel Gestaltungsfreiraum. Seine Stromaufnahme ist so gering, daß er auch über Trenntransformatoren betrieben werden kann. Der mit der Motorwelle umlaufende Walzenkörper gestattet eine großflächige Abstützung des exzentrischen Kurbelnockens, so daß von der Kolbenstange ausgehende, auf die Motorwelle zurückgeführte Impulsstöße gut abgefangen werden. Für eine zusätzliches Abfangen von rückwirkenden Stößen sorgt die Lagerung des äußeren Wellenstummels. Auf diese Weise eignet sich die Antriebsvorrichtung besonders bei Zahnspülgeräten, die impulsweise Wasserstöße abgeben.

Nach einer weiteren Ausgestaltung der Erfindung ist vorgesehen, daß auf der Motorwelle eine frei drehbare Dämpferscheibe angeordnet ist, wobei benachbart zur Dämpferscheibe eine Anschlagscheibe vorgesehen ist, die mit der Motorwelle drehfest verbunden ist. Mittels der Dämpfungsscheibe können sich bei variabler Last instabile Bereiche des Motors verschieben bzw. weggedämpft werden, so daß sie nicht zur Auswirkung kommen.

Nach einer weiteren Ausgestaltung der Erfindung ist vorgesehen, daß der Kolbenstangenkopf wenigstens im Bereich des Kurbelnockens in einer Axialführung verschieblich geführt ist und daß der Kurbelnocken in einen Führungsschlitz des Kolbenstangenkopfes eingreift, der senkrecht zur Verschieberichtung der Kolbenstange verläuft. Die Kurbelstange ist damit daran gehindert, Kippbewegungen auszuführen, die die Dichtfähigkeit des Kolbens beeinträchtigen könnten.

Nach einer weiteren Ausgestaltung der Erfindung ist vorgesehen, daß das Lager für den Walzenkörper als Spiralrillenlager ausgebildet ist. Ein solches Rillenlager läßt sich zusammen mit einem Umgehäuse des Antriebes spritzen.

Die Erfindung wird anhand des in der Zeichnung dargestellten Ausführungsbeispieles näher erläutert. Es zeigen:

Fig. 1 einen Schnitt durch eine Antriebsvorrichtung, die eine Drehbewegung eines Einphasensynchronmotors in eine pulsierende Axialbewegung umsetzt, die auf einen Pumpenkolben übertragen wird, im Schnitt längs der Linie I—I nach Fig. 2,

Fig. 2 einen Schnitt durch die Antriebsvorrichtung nach Fig. 1 längs des Schnittes II—II in Fig. 1.

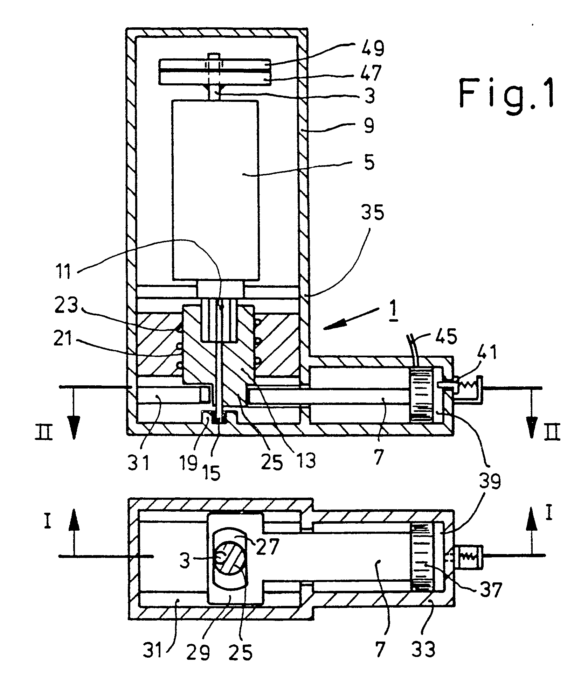

Fig. 1 zeigt eine Antriebsvorrichtung 1, mittels der die Drehbewegung der Welle 3 eines Einphasensynchronmotors 5 in eine pulsierende Axialbewegung einer Kolbenstange 7 umgewandelt wird. Der Einphasensynchronmotor 5 ist in einem Gehäuse 9 gelagert. Auf seine Motorwelle 3 ist ein Ritzel 11 aufgeflanscht. Auf dieses Ritzel ist drehschlüssig ein Walzenkörper 13 aufgeschoben, durch den ein Wellenstummel 15 der Motorwelle 3 hindurch verläuft.

Ein Stummel 15 dieser Welle ist in einem Wellenlager 19 gelagert. Der Mantel 21 des Walzenkörpers 13 lagert in einem Rillenlager 23, und zwar auf voller Breite der Mantelfläche.

Am Walzenkörper 13 ist ein Kurbelnocken 25 vorgesehen, der exzentrisch zur Motorwelle 3 angeordnet ist. Dieser exzentrische Kurbelnocken 25 (Fig. 2) greigt durch einen Längsschlitz 27 des Kolbenstangenkopfes der Kolbenstange 7.

Der Kolbenstangenkopf 29 ist im Gehäuse in nutenartigen Axialführungen 31 geführt. Der Kolbenstangenkopf kann mithin nur Axialbewegungen ausführen.

In einem Pumpenzylinder 33, der an das Gehäuse 35 der Antriebsvorrichtung 1 angeflanscht ist, befindet sich ein an der Kolbenstange 7 angeordneter Kolben 37. Der Kolben 37 kann in einem Pumpraum 39 Wasser komprimieren und durch einen mittels eines einseitig schließenden Ventils verschließbaren Auslaß 43 abspritzen. Die Wasserzuführung erfolgt über eine Zuführungsleitung 45.

Beim Betrieb werden pulsierende Waserstöße durch den Auslaß 43 abgegeben. Dabei entstehen über die Kolbenstange 7 Rückstöße, die über das Wellenlager 19 und das Rillenlager 21 so weitgehend aufgefangen werden, daß die Motorwelle 3 nicht auf Biegung belastet wird.

Auf die Motorwelle 3 ist auf der von dem Walzenkörper 13 abliegenden Seite des Motors 5 eine Anschlagscheibe 47 drehfest aufgeflanscht. An dieser Scheibe läuft frei drehbar auf der Motorwelle 3 eine Dämpferscheibe 49. Mittels dieser Dämpferscheibe werden bei variabler Last instabile Breiche verschoben. Wenn die Dampferscheibe aus einem weichmagnetischen Material besteht, dann kann sie bei erregtem Motor 5 vom Magnetfeld des Motors an die Anschlagscheibe 47 herangezogen werden.

## Patentansprüche

1. Antriebsvorrichtung (1) mit einem Rotationsantriebsmotor (5) zum Umwandeln der Drehbewegung der Motorwelle (3) in eine pulsierende Axialbewegung mittels eines exzentrischen Nockens, (25), insbesondere zum Antreiben eines Pumpenkolbens (37), gekennzeichnet durch einen kraftschlüssig mit der Motorwelle (3) eines Einphasensynchronmotors (5) verbundenen, mit der Motorwelle (3) gleichachsigen Walzenkörper (13), der mit seinem exzentrischen Kurbelnocken (25) auf eine Kolbenstange (7) einwirkt, und eine Mehrfachlagerung dieses Antriebswellenzuges, bestehend aus einem breitflächigen Lager (23) für den Mantel (21) des Walzenkörpers (13) und einem Wellenlager (19) für einen auf der vom Motor (5) abliegenden Seite aus dem Walzenkörper (13) vorstehenden Wellenstummel (15).

2. Antriebsvorrichtung nach Anspruch 1, dadurch gekennzeichnet, daß auf der Motorwelle (3) eine frei drehbare Dämpferscheibe (49) angeordnet ist.

3. Antriebsvorrichtung nach den Ansprüchen 1 und 2, dadurch gekennzeichnet, daß benachbart zur Dämpferscheibe eine Anschlagsscheibe (47) vorgesehen ist, die mit der Motorwelle (3) drehfest verbunden ist.

4. Antriebsvorrichtung nach den Ansprüchen 1 bis 3, dadurch gekennzeichnet, daß der Kolbenstangenkopf (29) wenigstens im Bereich des Kurbelnockens (25) in einer Axialführung verschieblich geführt ist und daß der Kurbelnocken (25) in einen Führungsschlitz (27) des Kolbenstangenkopfes (29) eingreift, der senkrecht zur Verschiebereichtung der Kolbenstange (7) verläuft.

5. Antriebsvorrichtung nach einem der Ansprüche 1 bis 4, dadurch gekennzeichnet, daß das Lager (23) für den Walzenkörper (13) als Spiralrillenlager ausgebildet ist.

6. Antriebsvorrichtung nach einem der Ansprüche 1 bis 5, dadurch gekennzeichnet, daß der Motor ohne Zwischenschaltung eines Getriebes unmittelbar an die Pumpe angeflanscht ist.

## Revendications

1. Dispositif d'entraînement (1) muni d'un moteur d'entraînement rotatif (5) alimenté à partir du réseau et servant à transformer le mouvement rotatif de l'arbre (3) du moteur en un mouvement axial pulsatoire au moyen d'une came excentrique (25), notamment pour entraîner un piston plongeur (37), caractérisé par un corps cylindrique (13) solidaire de l'arbre (3) d'un moteur synchrone monophasé (5) et coaxial avec l'arbre (3) du moteur, corps cylindrique qui agit sur une tige de piston (7) par sa came excentrique (25) et un dispositif d'appui multiple pour cet ensemble d'arbre d'entraînement, constitué d'un palier (23) à surface large pour la surface périphérique (21) du corps cylindrique (13) et d'un palier d'arbre (19) pour un bout d'arbre (15) faisant saillie du corps cylindrique (13) du côté situé à l'opposé du moteur (5).

2. Dispositif d'entraînement selon la revendication 1, caractérisé en ce que, sur l'arbre (13) du moteur, est disposé un disque amortisseur à rotation libre (49).

3. Dispositif d'entraînement selon l'une des revendications 1 et 2, caractérisé en ce qu'à côté du disque amortisseur, est prévu un disque de butée (47) lié rigidement à l'arbre (3) du moteur.

4. Dispositif d'entraînement selon l'une des revendications 1 à 3, caractérisé en ce qu'à l'endroit de la came excentrique, la tête de la tige de piston est guidée à coulissement dans un guidage axial et en ce que la came excentrique pénètre dans une coulisse de guidage de la tête de la tige de piston, coulisse qui s'étend perpendiculairement à la direction de coulissement de la tige de piston.

5. Dispositif d'entraînement selon l'une des revendications 1 à 4, caractérisé en ce que le palier (23) pour le corps cylindrique (13) est réalisé sous la forme d'un palier à rainure hélicoïdale.

6. Dispositif d'entraînement selon l'une des revendications 1 à 5, caractérisé en ce que le moteur est bridé directement à la pompe, sans interposition d'une transmission.

**Claims**

1. A driving device (1) comprising a mains-powered rotary drive motor (5), for converting the rotary movement of the motor shaft (3) into a pulsating axial movement by means of an eccentric cam (25) in particular for driving a pump-piston (37) characterized by a cylindrical body (13), which is force-coupled to the motor shaft (3) of a single-phase synchronous motor (5), which is coaxial with the motor shaft (3), and which cooperates with a piston rod (7) with its eccentric cam (25), and a multiple bearing arrangement of this drive-shaft system, comprising a broad-area bearing (23) for the circumferential surface (21) of the cylindrical body (13) and a shaft bearing (19) for a shaft end (15) which projects from the cylindrical body (13) at the end surface which is remote from the motor.

2. A driving device as claimed in Claim 1, characterized in that the motor shaft (3) carries a freely rotatable damping disc (49).

3. A driving device as claimed in Claims 1 and 2, characterized in that adjacent the damping disc an abutment disc (47) is rotatably connected to the motor shaft (3).

4. A driving device as claimed in Claims 1 to 3, characterized in that the piston-rod end (29) is slidably guided in an axial guide means, at least at the location of the eccentric cam (25), and the cam (25) engages in a guide slot (27) in the piston-rod end (29), which slot extends perpendicularly to the direction of movement of the piston rod (7).

5. A driving device as claimed in any one of the Claims 1 to 4, characterized in that the bearing (23) for the cylindrical body (13) is a spiral-groove bearing.

6. A driving device as claimed in any one of the Claims 1 to 5, characterized in that the motor is flanged directly to the pump without an intermediate drive mechanism.

Fig.1